# EUROPÄISCHE PATENTSCHRIFT

(11) **EP 4 077 430 B1**
(45) Veröffentlichungstag und Bekanntmachung des Hinweises auf die Patenterteilung: **09.08.2023**
(21) Anmeldenummer: 19824294.3
(22) Anmeldetag: 16.12.2019
(51) Int. Cl.: C08F 230/08, C08G 18/28, C08G 63/695, C08G 65/336, C08L 71/02, C09D 171/02, C09J 171/02

(54) **VERFAHREN ZUR HERSTELLUNG VON ORGANYLOXYSILANTERMINIERTEN POLYMEREN**
METHOD FOR PRODUCING ORGANYLOXYSILANE-TERMINATED POLYMERS
PROCÉDÉ DE PRODUCTION DE POLYMÈRES À TERMINAISON ORGANYLOXYSILANE

(43) Veröffentlichungstag der Anmeldung: 26.10.2022
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Fritz, Helmut
(86) Internationale Anmeldenummer: PCT/EP2019/085383
(87) Internationale Veröffentlichungsnummer: WO 2021/121543

(56) Entgegenhaltungen:
- WO-A1-2006/136261
- WO-A1-2015/024773

## Beschreibung

Die Erfindung betrifft ein Verfahren zur Herstellung einer organyloxysilanterminierte Polymere enthaltenden Mischung, die Mischung sowie deren Verwendung zur Herstellung von Kleb- und Dichtstoffen.

Polymersysteme, die über reaktive Alkoxysilylgruppen verfügen, insbesondere silanterminierte Polyether, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Klebstoffen, insbesondere von elastischen Klebesystemen.

Zur Produktion von kommerziell erhältlichen Produkten sind unterschiedliche Verfahren zur Herstellung von silanterminierten Polymeren bekannt. Eines der bedeutendsten besteht in der Umsetzung von langkettigen Polyethern mit isocyanatoalkyl-funktionellen Alkoxysilanen. Letztere reagieren mit den endständigen Hydroxygruppen des Polyether, so dass eine nahezu vollständige Kettenterminierung mit reaktiven Silanfunktionen erlaubt. Dies stellt einen signifikanten Vorteil gegenüber anderen Syntheserouten zur Herstellung von silanterminierte Polymere da.

Problematisch an diesem Verfahren ist jedoch die Tatsache, dass die hier benötigten isocyanatoalkyl-funktionellen Alkoxysilane in hohem Maße toxisch sind, weshalb sichergestellt werden muss, dass diese im Endprodukt, d.h. dem silanterminierten Polymer, nicht mehr vorhanden sind. Gleichzeitig ist es unumgänglich für eine vollständige und schnelle Silanterminierung aller Kettenenden, dass ebendiese toxischen Isocyanatosilane in einem gewissen Überschuss eingesetzt werden. Ohne diesen Überschuss würde die Reaktionsgeschwindigkeit gegen Reaktionsende ob der zunehmenden Ausdünnung der reaktiven Gruppen stark abnehmen. Eine hinreichend schnelle und damit wirtschaftlich sinnvolle Produktion wäre auf diese Weise nicht oder zumindest nur bedingt möglich.

Dies gilt sowohl für eine diskontinuierliche wie eine kontinuierliche Produktion. Lange Reaktionszeiten bedeuten lange Anlagenbelegzeiten und sind damit teuer. Für kontinuierliche Reaktionen ist eine hohe Reaktionsgeschwindigkeit jedoch noch einmal entscheidender, weil hier der mit einer Anlage erreichbare Durchsatz direkt proportional zur Reaktionsgeschwindigkeit ist, wohingegen bei einer diskontinuierlichen Reaktionsführung noch Zeiten für Be- und Entladung, Abkühl- und Aufwärmvorgänge hinzukommen, die von der Reaktionsgeschwindigkeit unabhängig sind. Der Effekt der Reaktionsgeschwindigkeit auf den Anlagendurchsatz ist somit auch hier vorhanden, wird aber zumindest teilweise "abgemildert".

Zur Lösung dieser Problematik wird in WO2006136261A vorgeschlagen, die silanterminierten Polymere in einem kontinuierlichen Verfahren unter Einsatz eines Isocyanatosilan-Überschusses herzustellen. Die dann dabei im Produkt verbleibenden nicht abreagierte Isocyanatosilan-Reste werden anschließend in einem nachfolgenden Schritt mit einer isocyanatreaktiven Verbindung, z.B. einem Alkohol oder einem Amin, abgefangen. Konkret beschrieben wird der Einsatz von Methanol als Abfangreagenz.

Nachteilig an diesem Verfahren ist jedoch die Tatsache, dass auf diese Weise ein signifikanter Anteil des eingesetzten Isocyanatosilans nicht mehr zur Silanterminierung von Polymeren eingesetzt wird, sondern letztendlich mit Methanol zu einem Carbamatosilan als Nebenprodukt umgesetzt wird. Natürlich kann dieses Carbamatosilan noch gewisse Aufgaben übernehmen, z.B. kann es als Wasserfänger dienen. Jedoch können diese Aufgaben in der Regel auch von weitaus einfacheren und damit auch billigeren Silanen wie z.B. simplen Vinyltrimethoxysilan übernommen werden.

Da Isocyanatosilane nur in einem sehr aufwändigen und damit teuren Verfahren, wie es z.B. in WO2008068175A beschrieben ist, hergestellt werden können, stellt diese in WO2006136261A vorgeschlagene Methode zu der Vernichtung des Isocyanatosilan-Überschusses, der bei der Synthese von silanterminierten Polymeren eingesetzt wird, eine teure und damit wirtschaftlich wenig sinnvolle Verschwendung dar.

Aus Sicht eines Produzenten von silanvernetzenden Polymeren wäre es daher in jedem Fall wünschenswert, ein Verfahren bereitstellen zu können, das ebenso schnell und leicht durchführbar ist, wie das in WO2006136261A, ohne jedoch die dort beschriebene Verschwendung teurer Isocyanatosilane zu beinhalten.

Gegenstand der Erfindung ist ein Verfahren zur Herstellung einer Mischung (M), welche silanterminierte Polymere (SP1) der allgemeinen Formel (I)

Y¹-[O-C(=O)-NH-(CR¹₂)_{b}-SiRₐ(OR²)₃₋ₐ]ₓ (I),

gegebenenfalls silanterminierte Polymere (SP2) der allgemeinen Formel (II)

   Y²-[O-C(=O)-NH-(CR¹₂)_{b}-SiRₐ(OR²)₃₋ₐ]_{z} (II)
und hydroxyfunktionelle Polymere (SP3) der allgemeinen Formel (III)

   Y²-[O-C(=O)-NH-(CR¹₂)_{b}-SiRₐ(OR²)₃₋ₐ]_{z-z1}(OH)_{z1} (III)
enthält, wobei
   - Y¹: einen x-wertigen Polymerrest mit einer zahlenmäßigen mittleren Molmasse Mₙ von mindestens 2000 g/mol bedeutet,
   - Y²: einen z-wertigen Oligomer- oder Polymerrest mit mindestens 3 identischen Wiederhohlungseinheiten, die mindestens 2 Kohlenstoffatome und mindestens 1 Heteroatom enthalten, bedeutet,
   - R: gleich oder verschieden sein kann und einen einwertigen, gegebenenfalls substituierten Kohlenwasserstoffrest darstellt,
   - R¹: gleich oder verschieden sein kann und Wasserstoffatom oder einen einwertigen, gegebenenfalls substituierten Kohlenwasserstoffrest darstellt,
   - R²: gleich oder verschieden sein kann und Wasserstoffatom oder einen einwertigen, gegebenenfalls substituierten Kohlenwasserstoffrest darstellt,
   - x: eine ganze Zahl von 2 bis 50 ist,
   - z: eine ganze Zahl von 1 bis 50 ist,
   - z1: kleiner oder gleich z ist und eine ganze Zahl von 1 bis 50 ist,
   - a: gleich oder verschieden sein kann und 0, 1 oder 2 ist und
   - b: gleich oder verschieden sein kann und eine ganze Zahl von 1 bis 10, ist,
bei dem in einem ersten Verfahrensschritt eine Umsetzung von mindestens einem Polymer (HP1) der allgemeinen Formel (IV)

   Y¹-[OH]ₓ (IV)
mit mindestens einem isocyanatfunktionellen Silan (S) der allgemeinen Formel (V)

   O=C=N- (CR¹₂) _{b}-SiRₐ (OR²) ₃₋ₐ (V)
zu silanterminierten Polymeren (SP1) erfolgt,
wobei das isocyanatfunktionelle Silan (S) der allgemeinen Formel (V) in einer Menge eingesetzt wird, dass auf jede Hydroxygruppe in den Verbindungen (HP1) der allgemeinen Formel (IV) mindestens 1,1 Isocyanatgruppen des isocyanatfunktionelle Silans (S) der allgemeinen Formel (V) kommen,
und anschließend in einem zweiten Verfahrensschritt sämtlich nicht abreagierten Isocyanatgruppen des isocyanatfunktionellen Silans (S) der allgemeinen Formel (V) mit mindestens einem Oligomer oder Polymer (HP2) der allgemeinen Formel (VI)

   Y²(OH)_{z} (VI),
umgesetzt werden und die Verbindung (HP2) der allgemeinen Formel (VI) in einer Menge eingesetzt wird, dass auf jede nach dem ersten Verfahrensschritt noch in der Reaktionsmischung befindliche Isocyanatgruppe mindestens 1,1 Hydroxygruppen in den Verbindungen (HP2) der allgemeinen Formel (IV) kommen,
mit der Maßgabe, dass
   - entweder z und z1 in den allgemeinen Formeln (II), (III) und (VI) den Wert von 1 besitzen, silanterminierte Polymere (SP2) der allgemeinen Formel (II) in der Mischung (M) enthalten sind, und die ebenfalls in der Mischung (M) enthaltenen Polymere (SP3) den im zweiten Reaktionsschritt eingesetzten Polymeren (HP2) entsprechen,
   - oder z in den allgemeinen Formeln (II), (III) und (VI) einen Wert größer 1 besitzt, Y² einen z-wertigen Oligomer- oder Polymerrest mit einer zahlenmäßigen mittleren Molmasse Mₙ von höchstens 1500 g/mol bedeutet, und die Mischung (M) hydroxyfunktionelle Polymere (SP3) enthält, in denen z1 kleiner ist als z.

Bevorzugt wird das isocyanatfunktionelle Silan (S) der allgemeinen Formel (V) in einer Menge eingesetzt, dass im ersten Verfahrensschritt auf jede Hydroxygruppe in den Polymeren (HP1) der allgemeinen Formel (IV) mindestens 1,15 Isocyanatgruppen kommen.

Bevorzugt wird das Oligomer oder Polymeren (HP2) der allgemeinen Formel (VI) im zweiten Verfahrensschritt in einer Menge eingesetzt, dass auf jede nach dem ersten Verfahrensschritt in der Mischung verbliebene Isocyanatgruppe der isocyanatfunktionellen Silane (S) der allgemeinen Formel (V) mindestens 1,2, besonders bevorzugt mindestens 1,3 Hydroxygruppen kommen.

Falls z einen Wert von mindestens 2 besitzt, bedeutet Y² vorzugsweise einen z-wertigen Oligomer- oder Polymerrest mit einer zahlenmäßigen mittleren Molmasse Mₙ von höchstens 1000 g/mol, besonders bevorzugt von höchstens 500 g/mol.

Das silanterminierte Polymer (SP2) ist vorzugsweise auch dann in der Mischung (M) enthalten, wenn z einen Wert von mindestens 2 besitzt.

Die zahlenmittlere Molmasse Mₙ wird dabei im Rahmen der vorliegenden Erfindung vorzugsweise mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Das erfindungsgemäße Verfahren erlaubt es, die Reaktion zur Herstellung der Polymere (SP1) mit der Herstellung der Polymere (SP2) und/oder (SP3) zu koppeln, wobei diese Kopplung zu einer schnellen Herstellung dieser Polymere in Kombination mit einer signifikanten Einsparung an teurem isocyanatfunktionellen Silan (S) führt. Dies gelingt, indem zunächst das Polymer (SP1) mit einem Überschuss an isocyanatfunktionellen Silanen (S) hergestellt wird, wobei dieser Silanüberschuss eine hohe Reaktionsgeschwindigkeit zur Folge hat. Dann allerdings wird dieser Überschuss des teuren isocyanatfunktionellen Silans (S) nicht - wie im Stand der Technik beschrieben - einfach durch eine Methanolzugabe vernichtet, sondern zur Herstellung der Polymere (SP2) und/oder (SP3) verwendet. Da in diesem zweiten Reaktionsschritt zwar nicht die Isocyanat-, dafür aber die Hydroxygruppen im Überschuss vorliegen, läuft auch dieser zweite Reaktionsschritt mit hoher Geschwindigkeit ab, und es wird ein Produkt erhalten, das frei ist von toxikologisch kritischen isocyanatfunktionellen Silanen (S).

Zwangsläufig führt dieser Prozess jedoch zu einer Polymermischung (M), in der nur das Polymer (SP1) weitgehend vollständig silanterminiert ist, wohingegen neben dem silanterminierten Polymere (SP2) immer auch Polymere (SP3) vorliegen müssen, die dasselbe Rückgrat wie das Polymer (SP2) aufweisen, jedoch nicht vollständig oder sogar überhaupt nicht silanterminiert sind und eine entsprechende Menge an nicht abreagierten Hydroxyfunktionen aufweisen.

Dieser Erfindung liegt daher die überraschende Entdeckung zugrunde, dass derartige Mischungen (M) trotz des Vorhandenseins von unvollständig oder überhaupt nicht silanterminierten Polymeren (SP3) ausgesprochen interessante Eigenschaften aufweisen, wenn
- die Polymere (SP2) und (SP3) monofunktionell sind, d.h. nur über eine Silan- bzw. Hydroxyfunktion verfügen (z = z1 = 1),
- oder die Polymere (SP2) über mehr als eine Silanfunktion verfügen und gleichzeitig die Polymere (SP2) und (SP3) Polymerruckgrate mit geringer mittlerer Molmassen Mₙ von maximal 2000 g/mol, bevorzugt von maximal 1000 g/mol, besonders bevorzugt von maximal 500 g/mol aufweisen.

Im ersten Fall enthält die Mischung (M) neben den weitgehend vollständig terminierten Polymeren (SP1) auch Polymere (SP2) mit nur einer Silanfunktion. Entsprechende Mischungen weisen deutlich verbesserte Haftungseigenschaften auf. Zudem können sie auch zur Herstellung von Dichtstoffen mit besonders niedrigem Modul verwendet werden. Eine unvollständige Terminierung der in diesem Fall monohydroxy-funktionellen Polymere (HP2), welche in der Mischung (M) die gleichzeitige Existenz von Polymeren (SP3) ohne Silanfunktion und mit genau einer Hydroxyfunktion, zur Folge hat, ist dabei überraschenderweise nicht störend.

Im zweiten Fall wirken die Polymere (SP2) auf Grund ihrer mindestens 2 Silanfunktionen und geringen mittleren Molmasse als zusätzlicher Vernetzter was höher Härten der aus der Mischung (M) erhältlichen ausgehärteten Massen zu Folge hat. Eine unvollständige Terminierung der hydroxyfunktionellen Polymere (HP2), welche die gleichzeitige Existenz von Polymeren (SP3) zur Folge hat, ist dabei überraschenderweise nicht störend.

Das erfindungsgemäße Verfahren kann diskontinuierlich durchgeführt werden, indem zunächst die hydroxyfunktionellen Polymere (HP1) und isocyanatfunktionellen Silane (S) in einem geeigneten Reaktor vermischt und zur Reaktion gebracht werden, bevor die hydroxyfunktionellen Polymere (HP2) zugegeben und mit dem nach dem ersten Reaktionsschritt verbliebenen Überschuss der Silane (S) zur Reaktion gebracht werden.

Ebenso kann das erfindungsgemäße Verfahren auch diskontinuierlich durchgeführt werden, indem in einem kontinuierlichen Mischer zunächst die oben genannten Komponenten (HP1) und (S) vermischt und anschließend kontinuierlich durch einen Reaktor geleitet werden, in dem die Reaktion dieser Komponenten stattfinden kann, um anschließend in einem zweiten Mischer kontinuierlich die oben genannte Komponenten (HP2) zudosiert wird. Anschließend kann die Reaktionsmischung wahlweise durch einen zweiten Reaktor geleitet werden, oder direkt in ein geeignetes Lagergefäß bzw. in einen geeigneten Lagertank gepumpt werden, wo dann der zweite erfindungsgemäße Verfahrensschritt stattfinden kann.

Vorzugsweise bedeutet x 2 oder 3, besonders bevorzugt 2.

Vorzugsweise bedeutet z 1, 2 oder 3, besonders bevorzugt 1 oder 2.

Vorzugsweise bedeutet z1 1, 2 oder 3, besonders bevorzugt 1 oder 2.

Vorzugsweise bedeutet a 0 oder 1.

Vorzugsweise bedeutet b 1, 3 oder 4, besonders bevorzugt 1 oder 3, insbesondere 1.

Beispiele für Reste R sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluor- isopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen. Bevorzugt sind unsubstituierte Kohlenwasserstoffreste. Besonders ist Rest R ein Alkylrest mit 1 oder 2 Kohlenstoffatomen, insbesondere Methylrest.

Beispiele für Reste R¹ sind Wasserstoffatom oder die für R angegebenen Reste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Die Reste Y¹ weisen vorzugsweise zahlenmittlere Molmassen Mₙ von mindestens 8 000 g/mol, besonders bevorzugt von mindestens 10 000 g/mol auf. Die Reste Y¹ weisen vorzugsweise zahlenmittlere Molmassen Mₙ von höchstens 40 000 g/mol, insbesondere von höchstens 25 000 g/mol, insbesondere von höchstens 20 000 g/mol, auf.

Beispiele für Polymerrest Y¹ sind organische Polymerreste, vorzugsweise deren zahlenmittlere Molekülmasse 200 bis 40 000 g/mol beträgt und die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer oder Polycarbonate enthalten.

Bevorzugt handelt es sich bei dem Polymerrest Y¹ um Polyester-, Polyether-, Polyurethan-, Polyalkylen- oder Polyacrylatreste, besonders bevorzugt um Polyurethanreste, Polyesterreste oder Polyoxyalkylenreste, insbesondere um Polyoxypropylenreste.

Sofern z und z1 in den Formeln (II), (III) und (VI) den Wert 1 besitzen, weisen die Reste Y² vorzugsweise zahlenmittlere Molmassen Mₙ von mindestens 150 g/mol, besonders bevorzugt von mindestens 200 g/mol auf und vorzugsweise zahlenmittlere Molmassen Mₙ von höchstens 20 000 g/mol, insbesondere von höchstens 10 000 g/mol auf.

Sofern z und z1 in den allgemeinen Formeln (II), (III) und (VI) einen Wert größer als 1 besitzen, weisen die Reste Y² vorzugsweise zahlenmittlere Molmassen Mₙ von mindestens 150 g/mol, besonders bevorzugt von mindestens 200 g/mol auf und vorzugsweise zahlenmittlere Molmassen Mₙ von höchstens 1 000 g/mol, insbesondere von höchstens 500 g/mol auf.

Die in Y² im Polymerrest enthaltenen Heteroatome werden vorzugsweise ausgewählt aus Stickstoff, Phosphor, Sauerstoff und Schwefel.

Beispiele für einen entsprechenden Polymerrest Y² sind organische Polymerreste mit den oben angegebenen zahlenmittlere Molekülmassen Mₙ, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer oder Polycarbonate enthalten.

Bevorzugt handelt es sich bei dem Polymerrest Y² um Polyester-, Polyether-, Polyurethan-, Polyalkylen- oder Polyacrylatreste, besonders bevorzugt um Polyurethanreste, Polyesterreste oder Polyoxyalkylenreste, insbesondere um Polyoxypropylenreste.

Die Struktur der einzusetzenden Polymere (HP1) der allgemeinen Formel (IV) ergibt sich aus den oben beschriebenen möglichen sowie bevorzugten Bedeutungen für die Reste Y¹. Bevorzugt handelt es sich bei den einzusetzenden Polymere (HP1) um Polyurethane oder Polyether mit eine Viskosität von 500 bis 1 000 000 mPas, besonders bevorzugt von 1000 bis 300 000 mPas. Insbesondere bevorzugt handelt es sich um Polypropylenglycole mit einer Viskosität von 1 000 bis 40 000 mPas.

Die Struktur der einzusetzenden Polymere (HP2) der allgemeinen Formel (VI) ergibt sich aus den oben beschriebenen möglichen sowie bevorzugten Bedeutungen für die Reste Y². Bevorzugt handelt es sich bei den einzusetzenden Polymere (HP2) um Polyurethane oder Polyether mit eine Viskosität von 10 bis 30 000 mPas, besonders bevorzugt von 50 bis 15 000 mPas. Insbesondere bevorzugt handelt es sich um Polypropylenglycole mit einer Viskosität von 10 bis 30 000 mPas.

Die Viskosität wird im Rahmen der vorliegenden Erfindung nach einer Temperierung auf 23°C mit einem DV 3 P-Rotationsviskosimeter von Fa. A. Paar (Brookfieldsysteme), unter Verwendung von Spindel 5 bei 2,5 UPM entsprechend der ISO 2555 bestimmt.

Die erfindungsgemäß eingesetzten Polyole (HP1) und (HP2) sind handelsübliche Produkte bzw. können nach in der Polymerchemie gängigen Verfahren hergestellt werden.

Bei den isocyanatfunktionellen Silanen (S) der allgemeinen Formel (V) handelt es sich vorzugsweise um OCN(CH₂)₃-Si(OCH₃)₃, OCN(CH₂)₃-Si(OC₂H₅)₃, OCN(CH₂)₃-Si(OCH₃)₂CH₃, OCN(CH₂)₃-Si(OC₂H₅)₂CH₃, OCN(CH₂)-Si(OCH₃)₃, OCN(CH₂)-Si(OC₂H₅)₃, OCN(CH₂)-Si(OCH₃)₂CH₃ oder OCN(CH₂)-Si(OC₂H₅)₂CH₃, wobei OCN(CH₂)₃-Si(OCH₃)₃ oder OCN(CH₂)-Si(OCH₃)₂CH₃ besonders bevorzugt sind.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Beide erfindungsgemäßen Verfahrensschritte werden vorzugsweise in Gegenwart eines Katalysators (K) durchgeführt. Dabei können sämtliche Katalysatoren eingesetzt werden, zur Katalyse von Isocyanaten mit Alkoholen Verwendung finden. Bevorzugte Beispiele für die erfindungsgemäß eingesetzten Katalysatoren sind bismuthaltigen Katalysatoren wie Bismuthcarboxylate wie Bismuth-(2-ethylhexanoat), Bismuth-neodecanoat oder Bismuth-tetramethylheptandionat. Auch Katalysatoren, die neben Bismut auch noch weitere Metalle enthalten, insbesondere Bismut-Zink-Mischkatalysatoren sind für das erfindungsgemäße Verfahren geeignet. Weitere bevorzugte Beispiele sind zinnhaltige Katalysatoren wie Dioctylzinndilaurat, Dioctylzinnoxid, Dioctylzinn-bis(acetylacetonat), Dibutylzinndilaurat, Dibutylzinnoxid, Dibutylzinn-bis(acetylacetonat), zirkoniumhaltige Katalysatoren wie Zirkoniumacetylacetonate, eisenhaltige Katalysatoren wie Eisenacetylacetonat sowie auch die Acetylacetonate weiterer Metalle.

Besonders bevorzugt handelt es sich bei den erfindungsgemäß eingesetzten Katalysatoren (K) um Carboxylate des Bismuts, wobei Bismuth-(2-ethylhexanoat), Bismuth-neodecanoat oder deren Mischungen besonders bevorzugt sind. Beispiele für kommerziell erhältliche Katalysatoren sind Borchi^{®} Kat 22, Borchi^{®} Kat VP 0243, Borchi^{®} Kat VP 0244 oder OMG 315 (alle OMG-Borchers), Bi-Neodecanoat der Firmen Chemos oder American Elements, Reaxis MSA 70 oder Reaxis C 719 der Fa. Reaxis, BICAT^{®}-Katalysatoren (The Shepherd Chemical Company, USA) und K-Kat^{®} K-348 (KING INDUSTRIES, INC., USA).

In den erfindungsgemäßen Verfahrensschritten 1 und 2 werden Katalysatoren (K) in Mengen von bevorzugt 1 bis 1000 ppm, besonders bevorzugt 20 bis 600 ppm, insbesondere 60 bis 400 ppm, eingesetzt. Die Angabe ppm beschreibt dabei 1 Gewichtsteil Katalysator (K) pro 1 000 000 Gewichtsteilen Reaktionsmischung. Vorzugsweise werden die Katalysatoren (K) dabei während es ersten Verfahrensschrittes zugegeben. Im Falle eines kontinuierlichen Verfahrens erfolgt die Katalysatorzugabe vorzugsweise während des Mischschrittes von Verfahrensschritt 1. Bei Verfahrensschritt 2 erfolgt vorzugsweise keine erneute Katalysatorzugabe, da der bei Verfahrensschritt 1 zugegebene Katalysator selbstverständlich beide Verfahrensschritte katalysieren kann.

Beide erfindungsgemäßen Verfahrensschritte werden vorzugsweise bei Temperaturen zwischen 20°C und 180°C, besonders bevorzugt zwischen 40°C und 150°C, insbesondere zwischen 50°C und 120°C durchgeführt.

Beide erfindungsgemäßen Verfahrensschritte werden vorzugsweise bei einem Druck von 100 bis 2000 hPa, besonders bevorzugt bei 900 bis 1100 hPa, durchgeführt.

Beide erfindungsgemäße Verfahrensschritte werden vorzugsweise in Schutzgas-Atmosphäre, bevorzugt Argon oder Stickstoff, durchgeführt.

Selbstverständlich kann das erfindungsgemäße Verfahren neben den erfindungsgemäßen Verfahrensschritten 1 und 2 auch noch weitere Verfahrensschritte aufweisen, die prinzipiell auch zwischen den Verfahrensschritten 1 und 2 durchgeführt werden können. Vorzugsweise weist das erfindungsgemäße Verfahren jedoch außer den erfindungsgemäßen Verfahrensschritten 1 und 2 keine weiteren Verfahrensschritte auf.

Das erfindungsgemäße Verfahren hat den Vorteil, dass es schnell und einfach in der Durchführung ist, wobei leicht verfügbare Rohstoffe als Edukte eingesetzt werden.

Das erfindungsgemäße Verfahren hat den Vorteil, dass die erhaltene Polymermischungen (M) frei von toxikologischen isocyanatfunktionellen Silanen (S) ist.

Das erfindungsgemäße Verfahren hat den Vorteil, dass die erhaltene Polymermischungen (M) sehr arm an monomeren Silanen ist, die die mechanischen Eigenschaften der aus dieser Polymermischung herstellbaren Kleb-, Dicht- oder Beschichtungsstoffe beeinflussen können.

Des Weiteren besitzt das erfindungsgemäße Verfahren den Vorteil, dass die entsprechend hergestellten silanvernetzbaren Polymermischungen (M) vergleichsweise lagerstabil sind und ohne Zugabe eines zusätzlichen Härtungskatalysators nur sehr langsam mit Luftfeuchtigkeit reagieren. Dies erleichtert nicht nur ihre Lagerung, sondern auch ihre Weiterverarbeitung.

Ein weiterer Vorteil des erfindungsgemäßen Verfahrens ist, dass die hergestellten Polymermischungen (M) direkt weiterverwendet werden können, z.B. bei der Herstellung von vernetzbaren Massen.

Die erfindungsgemäß hergestellten silanterminierten Polymermischungen (M) können überall dort eingesetzt werden, wo auch bisher silanterminierte Polymere eingesetzt wurden.

Gegenstand der Erfindung sind auch die nach dem vorstehenden Verfahren herstellbaren Die Polymermischungen (M).

Insbesondere eignen sie sich zur Herstellung von vernetzbaren Massen, insbesondere zu in Kleb- und Dichtstoffen sowie von Beschichtungen. Die vernetzbaren Massen sind insbesondere raumtemperaturhärtbar. Die Herstellung von silanvernetzenden Beschichtungen, Kleb- und Dichtstoffen aus entsprechenden Polymeren ist in der Literatur bereits vielfach beschrieben, z.B. in EP1535940A. Die in diesen Dokumenten beschriebenen feuchtigkeitshärtenden Formulierungen auf Basis von silanterminierten Polymeren, die dabei zum Einsatz kommenden weiteren Inhaltsstoffe, sowie die dort beschriebenen Verfahren zur Herstellung entsprechender Formulierungen sind ebenso zum Offenbarungsgehalt dieser Beschreibung zu rechnen, wie die dort beschriebenen Anwendungen für die fertig formulierten Beschichtungen, Kleb- und Dichtstoffe.

In den nachstehend beschriebenen Beispielen beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiele

### Beispiel 1a: Herstellung einer Mischung aus silanterminierten Polypropylenglycolen

In einem 1000 ml Reaktionsgefäß mit Rühr-, Kühl- und Heizmöglichkeiten werden 400,0 g (22,2 mMol) eines beidseitig hydroxyterminierten Polypropylenglycols mit einer mittleren Molmasse Mₙ von 18 000 g/Mol (käuflich erhältlich unter der Bezeichnung Acclaim^{®} 18200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 18,2 g (88,8 mmol) 3-Isocyanatopropyl-trimethoxysilan (käuflich erhältlich unter der Bezeichnung GENIOSIL^{®} GF40 von der Wacker Chemie AG, D-München) zugetropft und anschließend 0,62 g Borchi-Katalysator 315 (ein bismut-neodecanoat-haltiger Katalysator der Fa. Borchers) mittels einer Eppendorf-Pipette zugegeben. Dies entspricht einem Wert von 150 ppm Katalysator bezogen auf das Gesamtgewicht der Reaktionsmischung. Direkt nach der Katalysatorzugabe kommt es zu einer Erwärmung der Reaktionsmischung auf 82-83°C. Danach wird bei einer Temperatur von 80°C gerührt.

Nach 60 min werden bei unveränderter Temperatur 266,4 g (53,3 mmol) eines monohydroxy-monobutoxy-terminierten Polypropylenglycols mit einer mittleren Molmasse Mₙ von 5000 g/Mol (käuflich erhältlich unter der Bezeichnung Preminol^{®} S 1005 bei der AGC Chemicals Europe, LTD, NL-Amsterdam) zugegeben. Anschließend wird für weitere 60 min bei 80 °C gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

### Beispiel 1b: Herstellung einer Mischung aus silanterminierten Polypropylenglycolen

Es wird ebenso vorgegangen in Beispiel 1a, wobei die folgenden Änderungen vorgenommen werden:
- Im Verfahrensschritt 1 (Reaktion des Acclaim^{®} 18200 mit dem isocyanatfunktionellen Silan) wird ein kleinerer Silanüberschuss von lediglich 13,7 g (66,8 mmol) eingesetzt.
- Im Verfahrensschritt 2 (Reaktion des überschüssigen isocyanatfunktionellen Silans mit dem monofunktionellen Polypropylenglycol) wird mit 133,2 g (26,6 mmol) dementsprechend weniger Preminol^{®} S 1005 zugegeben.

Auch hier wird eine isocyanatfreie Polymermischung erhalten.

### Vergleichsbeispiel 1c: Herstellung eines nicht erfindungsgemäßen silanterminierten Polypropylenglycols

Es wird ebenso vorgegangen in Beispiel 1a, wobei die folgenden Änderungen vorgenommen werden:
- Im Verfahrensschritt 1 (Reaktion des Acclaim^{®} 18200 mit dem isocyanatfunktionellen Silan) wird ein nochmals kleinerer Silanüberschuss von lediglich 10,9 g (53,3 mmol) eingesetzt.
- Im Verfahrensschritt 2 wird kein Preminol^{®} S 1005 zugegeben. Stattdessen wird das überschüssige Isocyanatosilan durch Zugabe von 0,43 g (13,4 mmol) Methanol vernichtet. Anders als bei Beispiel 1a wird die Reaktionstemperatur zu Beginn von Verfahrensschritt 2, d.h. direkt vor Zugabe des Methanols auf 60 °C abgesenkt und nach der Methanolzugabe auch für 60 min bei dieser Temperatur nachgerührt.

Das erhaltene Polymer ist isocyanatfrei.

### Beispiel 2a: Herstellung einer Klebstoffformulierung

40,0 g der Polymermischung aus Beispiel 1a werden in einem Laborplanetenmischer der Fa. PC-Laborsystem, ausgestattet mit einem Balkenmischer und einem Dissolver, mit 20 g Diisononylphthalat (käuflich erhältlich unter anderem bei der Fa. Merck KGaA, D-Darmstadt), 4,0 g Vinyltrimethoxysilan (käuflich erhältlich unter der Bezeichnung GENIOSIL^{®} XL 10 bei der Fa. Wacker Chemie AG, D-München), 1,0 g einer Stabilisatormischung (Mischung aus 20% Irganox^{®} 1135 (CAS-Nr. 125643-61-0), 40% Tinuvin^{®} 571 (CAS-NR. 23328-53-2) und 40% Tinuvin^{®} 765 (CAS-NR. 41556-26-7), käuflich erhältlich unter der Bezeichnung TINUVIN^{®} B 75 bei der BASF SE, Deutschland), 24,2 g eines mit Stearinsäure beschichteten Calciumcarbonat mit einem mittleren Teilchendurchmesser (D50%) von ca. 2,0 µm (käuflich erhältlich unter der Bezeichnung Omyabond 520 bei der Firma Omya, D-Köln) und 72,6 g eines mit Fettsäure beschichteten gefällten Calciumcarbonats mit einem mittleren Teilchendurchmesser (D50%) von ca. 0,07 µm (käuflich erhältlich unter der Bezeichnung Hakuenka CCR S10 bei der Fa. Shiraishi Omya GmbH, Aut-Gummern) vermischt, und die Feststoffe werden eine Minute mit dem Balkenmischer bei 200 U/min eingerührt. Danach wird für 5 min mit 600 U/min mit dem Balkenmischer und 1000 U/min mit dem Dissolver gerührt.

Es werden weitere 30 g Diisononylphthalat, 6,0 g einer hydrophoben pyrogenen Kieselsäure mit einer BET-Oberfläche von ca. 200 m²/g (käuflich erhältlich unter der Bezeichnung HDK^{®} H18 bei der Fa. Wacker Chemie AG, D-München), 0,2 g Dioctylzinndilaurat (käuflich erhältlich unter der Bezeichnung TIB KAT 216 bei der Fa. TIB Chemicals AG, D-Mannheim) und 2 g N-(2-Aminoethyl)-3-Aminopropyl-trimethoxysilan (käuflich erhältlich unter der Bezeichnung GENIOSIL^{®} GF 9 bei der Fa. Wacker Chemie AG, D-München) zugegeben und eine Minute mit dem Balkenmischer bei 600 U/min und dem Dissolver bei 1000 U/min eingerührt. Danach wird im Teilvakuum (ca. 100 mbar) mit dem Balkenmischer für 1 Minute bei 600 U/min und 1 min bei 200 U/min homogenisiert und blasenfrei gerührt.

Die so erhaltene Masse wird in 310 ml PE-Kartuschen abgefüllt und 24 Stunden bei 20°C vor der Untersuchung gelagert.

### Beispiel 2b: Herstellung einer Klebstoffformulierung

Es wird ebenso vorgegangen in Beispiel 2a, wobei anstelle der Polymermischung aus Beispiel 1a eine identische Menge der Polymermischung aus Beispiel 1b eingesetzt wird.

### Vergleichsbeispiel 2c: Herstellung einer Klebstoffformulierung (nicht erfindungsgemäß)

Es wird ebenso vorgegangen in Beispiel 2a, wobei anstelle der Polymermischung aus Beispiel 1a eine identische Menge des Polymers aus Vergleichsbeispiel 1c eingesetzt wird.

### Beispiel 3: Bestimmung von Eigenschaftsprofilen der hergestellten Klebstoffformulierungen

Die in den Beispielen 2a bis 2c erhaltenen Klebstoffe werden vernetzen gelassen und hinsichtlich ihrer Hautbildung, ihrer mechanischen Eigenschaften und ihrer Haftung auf unterschiedlichen Substraten untersucht. Die Ergebnisse finden sich in Tabelle 1.

### Hautbildungszeit (HBZ)

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt die Probe am Spatel kleben, hat sich noch keine Haut gebildet. Bleibt keine Probe am Spatel mehr kleben, so hat sich eine Haut gebildet und die Zeit wird notiert.

### Mechanische Eigenschaften

Die Massen werden jeweils auf ausgefräste Teflonplatten mit 2 mm Tiefe ausgestrichen und 2 Wochen bei 23°C und 50 relativer Luftfeuchte gehärtet.

Shore-A-Härte wird gemäß DIN 53505 bestimmt.

Reißfestigkeit wird gemäß DIN 53504-S1 bestimmt.

Das 100%-Modul wird gemäß DIN 53504-S1 bestimmt.

Reißdehnung wird gemäß DIN 53504-S1 bestimmt.

### Haftungsprofil ohne Wasserlagerung

Mit den Massen werden jeweils Haftversuche auf den in Tabelle 1 angegebenen Substraten unter den folgenden Bedingungen durchgeführt:
Eine 5-7 cm dicke Raupe wird auf dem Substrat aufgetragen und 14 Tage im Klimaschrank bei Raumtemperatur und einer relativen Luftfeuchtigkeit von 50 % gelagert.

Nach der Lagerung wird ein Peel-Test durchgeführt, bei dem die Raupe an einem Ende mit einem scharfen Messer auf einer Länge von ca. 2 cm vom Substrat abgeschnitten wird. Anschließend wird, ausgehend von diesem Schnitt, der Rest der Raupe von dem Substrat abgerissen und die Art des entstehenden Risses (kohäsiv und/oder adhäsiv) beurteilt.

### Haftungsprofil mit Wasserlagerung

Mit den Massen werden jeweils Haftversuche auf den in Tabelle 1 angegebenen Substraten unter den folgenden Bedingungen durchgeführt:
Eine 5-7 cm dicke Raupe wird auf dem Substrat aufgetragen und 14 Tage im Klimaschrank bei Raumtemperatur und einer relativen Luftfeuchtigkeit von 50 % gelagert. Anschließend wird die Probe für weitere 14 Tage bei Raumtemperatur unter Wasser gelagert.

Der anschließende Peel-Test wird ebenso durchgeführt wie oben beschrieben.

**Tabelle 1**

| **Masse aus Beispiel** | **2a** | **2b** | **2c* (V)** |
|---|---|---|---|
| HBZ [min] | 46 | 28 | 32 |
| Shore-A-Härte | 35 | 45 | 48 |
| Reißfestigkeit [N/mm²] | 2,0 | 2,8 | 2,6 |
| 100%-Modul | 0,8 | 1,3 | 1,2 |
| Reißdehnung [%] | 360 | 324 | 268 |

| **Haftung ohne Wasserlagerung** | | | |
|---|---|---|---|
| AlMgSi1 | Φ | Φ | Φ |
| AlMg1 | + | + | + |
| AlMg eloxiert | + | + | + |
| Edelstahl | + | + | + |
| Kupfer | + | + | + |
| Geschnittener Beton Rocholl | + | + | + |
| Glas | + | + | + |
| Holz (Buche) | + | + | + |
| PMMA | - | - | - |
| PMMA gefüllt | + | + | - |
| ABS | - | - | - |
| PVC weich | + | + | - |
| PVC hart Simona transparent | - | - | - |
| PVC hart grau Simona CAW | - | - | - |
| PVC hart weiß Kömadur ES | + | - | - |
| Polycarbonat | + | - | - |
| Polystryol | + | - | - |

| **Haftung mit Wasserlagerung** | | | |
|---|---|---|---|
| AlMgSi1 | + | + | + |
| AlMg1 | + | + | + |
| AlMg eloxiert | + | + | + |
| Edelstahl | + | - | - |
| Kupfer | + | + | + |
| Geschnittener Beton Rocholl | - | - | - |
| Glas | + | + | + |
| Holz (Buche) | - | - | - |
| PMMA | - | - | - |
| PMMA gefüllt | + | Φ | - |
| ABS | - | - | - |
| PVC weich | + | - | - |
| PVC hart Simona transparent | + | Φ | - |
| PVC hart grau Simona CAW | + | - | - |
| PVC hart weiß Kömadur ES | + | - | - |
| Polycarbonat | - | - | - |
| Polystryol | + | - | - |

| | | | |
|---|---|---|---|
| (+) gute Haftung / kohäsiver Riss beim Peel-Test (Ø) Teilhaftung / kohäsiver und adhesiver Riss Peel-Test (-) keine Haftung / adhesiver Riss beim Peel-Test *nicht erfindungsgemäß | | | |

### Beispiel 4a: Herstellung einer Mischung aus silanterminierten Polyethern

In einem 1000 ml Reaktionsgefäß mit Rühr-, Kühl- und Heizmöglichkeiten werden 400,0 g (33,3 mMol) eines beidseitig hydroxyterminierten Polypropylenglycols mit einer mittleren Molmasse Mₙ von 12 000 g/Mol (käuflich erhältlich unter der Bezeichnung Acclaim^{®} 12200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 12,9 g (80,0 mmol) Isocyanatomethyl-methyldimethoxysilan (käuflich erhältlich unter der Bezeichnung GENIOSIL^{®} XL42 von der Wacker Chemie AG, D-München) zugetropft und anschließend 0,62 g Borchi-Katalysator 315 mittels einer Eppendorf-Pipette zugegeben. Direkt nach der Katalysatorzugabe kommt es zu einer Erwärmung der Reaktionsmischung auf 83-84°C. Danach wird bei einer Temperatur von 80°C gerührt.

Nach 60 min werden bei unveränderter Temperatur 4,1 g (20,0 mmol) Methyltriglycol zugegeben. Anschließend wird für weitere 60 min bei 80 °C gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

### Beispiel 4b: Herstellung einer Mischung aus silanterminierten Polyethern

Es wird ebenso vorgegangen in Beispiel 4a, wobei im zweiten Verfahrensschritt anstelle von 4,1 g Methyltriglycol, 7,0 g (20 mmol) eines Polyglycol-Monomethylethers mit einer mittleren Molekülmasse Mₙ von 350 g/mol (käuflich erhältlich unter der Bezeichnung Polyglycol M 350 bei der Fa. Clariant, Schweiz-Basel) verwendet werden.

### Beispiel 5a: Herstellung einer Klebstoffformulierung

58,0 g der Polymermischung aus Beispiel 4a werden in einem Laborplanetenmischer der Fa. PC-Laborsystem, ausgestattet mit einem Balkenmischer und einem Dissolver, mit 40 g Diisoundecylphthalat (käuflich erhältlich unter dem Namen Jayflex DIUP bei der Fa. ExxonMobil), 4,0 g Vinyltrimethoxysilan und 96,0 g eines mit Stearinsäure beschichteten gemahlenes Calciumcarbonats mit einem mittleren Teilchendurchmesser (D50%) von ca. 0,4 µm (käuflich erhältlich unter der Bezeichnung Omyabond 302 bei der Firma Omya, D-Köln) vermischt, und das Calciumcarbonat wird eine Minute mit dem Balkenmischer bei 200 U/min eingerührt. Danach wird für 5 min mit 600 U/min mit dem Balkenmischer und 1000 U/min mit dem Dissolver gerührt.

Es werden 2 g 3-Aminopropyl-trimethoxysilan (käuflich erhältlich unter der Bezeichnung GENIOSIL^{®} GF 96 bei der Fa.

Wacker Chemie AG, D-München) zugegeben und eine Minute mit dem Balkenmischer bei 600 U/min und dem Dissolver bei 1000 U/min eingerührt. Danach wird im Teilvakuum (ca. 100 mbar) mit dem Balkenmischer für 1 Minute bei 600 U/min und 1 min bei 200 U/min homogenisiert und blasenfrei gerührt.

Die so erhaltene Masse wird in 310 ml PE-Kartuschen abgefüllt und 24 Stunden bei 20°C vor der Untersuchung gelagert.

### Beispiel 5b: Herstellung einer Dichtstoffformulierung

Es wird ebenso vorgegangen in Beispiel 5a, wobei anstelle der Polymermischung aus Beispiel 4a eine identische Menge der Polymermischung aus Beispiel 4b eingesetzt wird.

### Beispiel 6: Bestimmung von Eigenschaftsprofilen der hergestellten Dichtstoffformulierungen

Die in den Beispielen 5a und 5b erhaltenen Klebstoffe werden vernetzen gelassen und nach den in Beispiel 3 beschriebenen Methoden hinsichtlich ihrer Hautbildung und ihrer mechanischen Eigenschaften untersucht. Die Ergebnisse finden sich in Tabelle 2.

**Tabelle 2**

| **Masse aus Beispiel** | **5a** | **5b** |
|---|---|---|
| HBZ [min] | 18 | 18 |
| Shore-A-Härte | 47 | 49 |
| Reißfestigkeit [N/mm²] | 2,4 | 2,4 |
| 100%-Modul | 1,4 | 1,5 |
| Reißdehnung [%] | 206 | 187 |

### Beispiel 7: Herstellung einer Mischung aus silanterminierten Polyethern

In einem 1000 ml Reaktionsgefäß mit Rühr-, Kühl- und Heizmöglichkeiten werden 400,0 g (22,2 mMol) eines beidseitig hydroxyterminierten Polypropylenglycols mit einer mittleren Molmasse Mₙ von 18 000 g/Mol (käuflich erhältlich unter der Bezeichnung Acclaim^{®} 18200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 10,9 g (53,3 mmol) 3-Isocyanatopropyl-trimethoxysilan zugetropft und anschließend 0,62 g Borchi-Katalysator 315 mittels einer Eppendorf-Pipette zugegeben. Direkt nach der Katalysatorzugabe kommt es zu einer Erwärmung der Reaktionsmischung auf 82-83°C. Danach wird bei einer Temperatur von 80°C gerührt.

Nach 60 min werden bei unveränderter Temperatur 4,7 g (13,4 mmol) eines Polyglycol-Monomethylethers mit einer mittleren Molekülmasse Mₙ von 350 g/mol (käuflich erhältlich unter der Bezeichnung Polyglycol M 350 bei der Fa. Clariant, Schweiz-Basel) zugegeben. Anschließend wird für weitere 60 min bei 80 °C gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

### Beispiel 8: Herstellung einer Klebstoffformulierung und Bestimmung von deren Eigenschaften

58,0 g der Polymermischung aus Beispiel 7 werden in einem Laborplanetenmischer der Fa. PC-Laborsystem, ausgestattet mit einem Balkenmischer und einem Dissolver, mit 40 g Diisoundecylphthalat (käuflich erhältlich unter dem Namen Jayflex DIUP bei der Fa. ExxonMobil), 4,0 g Vinyltrimethoxysilan und 95,6 g eines mit Stearinsäure beschichteten gemahlenes Calciumcarbonats mit einem mittleren Teilchendurchmesser (D50%) von ca. 0,4 µm (käuflich erhältlich unter der Bezeichnung Omyabond 302 bei der Firma Omya, D-Köln) vermischt, und das Calciumcarbonat wird eine Minute mit dem Balkenmischer bei 200 U/min eingerührt. Danach wird für 5 min mit 600 U/min mit dem Balkenmischer und 1000 U/min mit dem Dissolver gerührt.

Es werden 2 g 3-Aminopropyl-trimethoxysilan und 0,4 g Dioctylzinndilaurat zugegeben und eine Minute mit dem Balkenmischer bei 600 U/min und dem Dissolver bei 1000 U/min eingerührt. Danach wird im Teilvakuum (ca. 100 mbar) mit dem Balkenmischer für 1 Minute bei 600 U/min und 1 min bei 200 U/min homogenisiert und blasenfrei gerührt.

Die so erhaltene Masse wird in 310 ml PE-Kartuschen abgefüllt und 24 Stunden bei 20°C vor der Untersuchung gelagert.

Der erhaltene Klebstoff wird vernetzen gelassen und nach den in Beispiel 3 beschriebenen Methoden hinsichtlich seiner Hautbildung und ihrer mechanischen Eigenschaften untersucht.

Die Hautbildezeit beträgt 17 min, die Shore-A-Härte 49, Reißfestigkeit 2,6 N/mm², das 100%-Modul 1,23 N/mm² und die Reißdehung 209%.

### Beispiel 9a: Herstellung einer Mischung aus silanterminierten Polyethern

In einem 1000 ml Reaktionsgefäß mit Rühr-, Kühl- und Heizmöglichkeiten werden 400,0 g (33,3 mMol) eines beidseitig hydroxyterminierten Polypropylenglycols mit einer mittleren Molmasse Mₙ von 12 000 g/Mol (käuflich erhältlich unter der Bezeichnung Acclaim^{®} 12200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 21,5 g (133,2 mmol) Isocyanatomethyl-methyldimethoxysilan zugetropft und anschließend 0,62 g Borchi-Katalysator 315 mittels einer Eppendorf-Pipette zugegeben. Direkt nach der Katalysatorzugabe kommt es zu einer Erwärmung der Reaktionsmischung auf ca. 84°C. Danach wird bei einer Temperatur von 80°C gerührt.

Nach 60 min werden bei unveränderter Temperatur 12,0 g (40,0 mmol) eines beidseitig hydroxyterminierten Polyglycols mit einer mittleren Molmasse Mₙ von 300 g/Mol (käuflich erhältlich unter der Bezeichnung Polyglycol 300 bei der Fa. Clariant, Schweiz-Basel) zugegeben. Anschließend wird für weitere 60 min bei 80 °C gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

### Beispiel 9b: Herstellung einer Mischung aus silanterminierten Polyethern

Es wird ebenso vorgegangen in Beispiel 9a, wobei die folgenden Änderungen vorgenommen werden:
- Im Verfahrensschritt 1 (Reaktion des Acclaim^{®} 12200 mit dem isocyanatfunktionellen Silan) wird ein kleinerer Silanüberschuss von lediglich 16,1 g (99,9 mmol) eingesetzt.
- Im Verfahrensschritt 2 (Reaktion des überschüssigen isocyanatfunktionellen Silans mit dem difunktionellen Ethylenglycol) wird mit 7,5 g (25,0 mmol) dementsprechend weniger Polyglycol 300 zugegeben.

Auch hier wird eine isocyanatfreie Polymermischung erhalten.

### Vergleichsbeispiel 9c: Herstellung eines nicht erfindungsgemäßen silanterminierten Polypropylenglycols

Es wird ebenso vorgegangen in Beispiel 9a, wobei die folgenden Änderungen vorgenommen werden:
- Im Verfahrensschritt 1 (Reaktion des Acclaim^{®} 12200 mit dem isocyanatfunktionellen Silan) wird ein nochmals kleinerer Silanüberschuss von lediglich 12,9 g (79,9 mmol) eingesetzt.
- Im Verfahrensschritt 2 wird kein Polyglycol 300 zugegeben. Stattdessen wird das überschüssige Isocyanatosilan durch Zugabe von 0,64 g (20,0 mmol) Methanol vernichtet. Anders als bei Beispiel 9a wird die Reaktionstemperatur zu Beginn von Verfahrensschritt 2, d.h. direkt vor Zugabe des Methanols auf 60 °C abgesenkt und nach der Methanolzugabe auch für 60 min bei dieser Temperatur nachgerührt.

Das erhaltene Polymer ist isocyanatfrei.

### Beispiel 10a: Herstellung einer Klebstoffformulierung

58,0 g der Polymermischung aus Beispiel 9a werden in einem Laborplanetenmischer der Fa. PC-Laborsystem, ausgestattet mit einem Balkenmischer und einem Dissolver, mit 40 g Diisoundecylphthalat (käuflich erhältlich unter dem Namen Jayflex DIUP bei der Fa. ExxonMobil), 4,0 g Vinyltrimethoxysilan und 96,0 g eines mit Stearinsäure beschichteten gemahlenes Calciumcarbonats mit einem mittleren Teilchendurchmesser (D50%) von ca. 0,4 µm (käuflich erhältlich unter der Bezeichnung Omyabond 302 bei der Firma Omya, D-Köln) vermischt, und das Calciumcarbonat wird eine Minute mit dem Balkenmischer bei 200 U/min eingerührt. Danach wird für 5 min mit 600 U/min mit dem Balkenmischer und 1000 U/min mit dem Dissolver gerührt.

Es werden 2 g 3-Aminopropyl-trimethoxysilan zugegeben und eine Minute mit dem Balkenmischer bei 600 U/min und dem Dissolver bei 1000 U/min eingerührt. Danach wird im Teilvakuum (ca. 100 mbar) mit dem Balkenmischer für 1 Minute bei 600 U/min und 1 min bei 200 U/min homogenisiert und blasenfrei gerührt.

Die so erhaltene Masse wird in 310 ml PE-Kartuschen abgefüllt und 24 Stunden bei 20°C vor der Untersuchung gelagert.

### Beispiel 10b: Herstellung einer Klebstoffformulierung

Es wird ebenso vorgegangen in Beispiel 10a, wobei anstelle der Polymermischung aus Beispiel 9a eine identische Menge der Polymermischung aus Beispiel 9b eingesetzt wird.

### Vergleichsbeispiel 10c: Herstellung einer Klebstoffformulierung

Es wird ebenso vorgegangen in Beispiel 9a, wobei anstelle der Polymermischung aus Beispiel 9a eine identische Menge des Polymers aus Vergleichsbeispiel 9c eingesetzt wird.

### Beispiel 11: Bestimmung von Eigenschaftsprofilen der hergestellten Klebstoffformulierungen

Die in den Beispielen 10a bis 10c erhaltenen Klebstoffe werden vernetzen gelassen und nach den in Beispiel 3 beschriebenen Methoden hinsichtlich ihrer Hautbildung und ihrer mechanischen Eigenschaften untersucht. Die Ergebnisse finden sich in Tabelle 3.

**Tabelle 3**

| **Masse aus Beispiel** | **10a** | **10b** | **10c* (V)** |
|---|---|---|---|
| HBZ [min] | 21 | 22 | 25 |
| Shore-A-Härte | 45 | 47 | 48 |
| Reißfestigkeit [N/mm²] | 1,9 | 2,2 | 2,0 |
| 100%-Modul | 1,2 | 1,3 | 1,51 |
| Reißdehnung [%] | 170 | 180 | 150 |

| | | | |
|---|---|---|---|
| *nicht erfindungsgemäß | | | |

### Beispiel 12: Herstellung einer Mischung aus silanterminierten Polyethern

In einem 1000 ml Reaktionsgefäß mit Rühr-, Kühl- und Heizmöglichkeiten werden 400,0 g (33,3 mMol) eines beidseitig hydroxyterminierten Polypropylenglycols mit einer mittleren Molmasse Mₙ von 12 000 g/Mol (käuflich erhältlich unter der Bezeichnung Acclaim^{®} 12200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 12,9 g (80,0 mmol) Isocyanatomethyl-methyldimethoxysilan zugetropft und anschließend 0,62 g Borchi-Katalysator 315 mittels einer Eppendorf-Pipette zugegeben. Direkt nach der Katalysatorzugabe kommt es zu einer Erwärmung der Reaktionsmischung auf 83-84°C. Danach wird bei einer Temperatur von 80°C gerührt.

Nach 60 min werden bei unveränderter Temperatur 4,0 g (20,0 mmol) eines beidseitig hydroxyterminierten Polyglycols mit einer mittleren Molmasse Mₙ von 200 g/Mol zugegeben. Anschließend wird für weitere 60 min bei 80 °C gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

### Beispiel 13: Herstellung einer Klebstoffformulierung und Bestimmung von deren Eigenschaften

58,0 g der Polymermischung aus Beispiel 12 werden in einem Laborplanetenmischer der Fa. PC-Laborsystem, ausgestattet mit einem Balkenmischer und einem Dissolver, mit 40 g Diisoundecylphthalat (käuflich erhältlich unter dem Namen Jayflex DIUP bei der Fa. ExxonMobil), 4,0 g Vinyltrimethoxysilan und 96,0 g eines mit Stearinsäure beschichteten gemahlenes Calciumcarbonats mit einem mittleren Teilchendurchmesser (D50%) von ca. 0,4 µm (käuflich erhältlich unter der Bezeichnung Omyabond 302 bei der Firma Omya, D-Köln) vermischt, und das Calciumcarbonat wird eine Minute mit dem Balkenmischer bei 200 U/min eingerührt. Danach wird für 5 min mit 600 U/min mit dem Balkenmischer und 1000 U/min mit dem Dissolver gerührt.

Es werden 2 g 3-Aminopropyl-trimethoxysilan zugegeben und eine Minute mit dem Balkenmischer bei 600 U/min und dem Dissolver bei 1000 U/min eingerührt. Danach wird im Teilvakuum (ca. 100 mbar) mit dem Balkenmischer für 1 Minute bei 600 U/min und 1 min bei 200 U/min homogenisiert und blasenfrei gerührt.

Die so erhaltene Masse wird in 310 ml PE-Kartuschen abgefüllt und 24 Stunden bei 20°C vor der Untersuchung gelagert.

Der erhaltene Klebstoff wird vernetzen gelassen und nach den in Beispiel 3 beschriebenen Methoden hinsichtlich seiner Hautbildung und ihrer mechanischen Eigenschaften untersucht. Die Hautbildezeit beträgt 14 min, die Shore-A-Härte 44, Reißfestigkeit 2,1 N/mm², das 100%-Modul 1,34 N/mm² und die Reißdehnung 170%.

### Beispiel 14: Herstellung einer Mischung aus silanterminierten Polyethern

In einem 1000 ml Reaktionsgefäß mit Rühr-, Kühl- und Heizmöglichkeiten werden 400,0 g (22,2 mMol) eines beidseitig hydroxyterminierten Polypropylenglycols mit einer mittleren Molmasse Mₙ von 18 000 g/Mol (käuflich erhältlich unter der Bezeichnung Acclaim^{®} 18200 von der Fa. Covestro AG, D-Leverkusen) vorgelegt und für 2 h bei 80°C und 1 mbar unter Rühren getrocknet. Danach wird das Vakuum mit Stickstoff gebrochen. Die gesamte folgende Reaktion wird unter einer Stickstoff-Schutzgasatmosphäre durchgeführt.

Zur Durchführung der Silanterminierung werden dem getrockneten Polyether bei 80°C zunächst 8,6 g (53,3 mmol) Isocyanatomethyl-methyldimethoxysilan zugetropft und anschließend 0,62 g Borchi-Katalysator 315 mittels einer Eppendorf-Pipette zugegeben. Direkt nach der Katalysatorzugabe kommt es zu einer Erwärmung der Reaktionsmischung auf 82-83°C. Danach wird bei einer Temperatur von 80°C gerührt.

Nach 60 min werden bei unveränderter Temperatur 1,3 g (6,5 mmol) eines beidseitig hydroxyterminierten Polyglycols mit einer mittleren Molmasse Mₙ von 200 g/Mol zugegeben (käuflich erhältlich unter der Bezeichnung Polyglycol 300 bei der Fa. Clariant, Schweiz-Basel) zugegeben. Anschließend wird für weitere 60 min bei 80 °C gerührt. Danach wird der Reaktionsmischung eine Probe entnommen und mittels IR-Analytik auf gegebenenfalls noch vorhandene Isocyanatosilanreste untersucht. Die Probe ist isocyanatfrei.

### Beispiel 15: Herstellung einer Klebstoffformulierung und Bestimmung von deren Eigenschaften

58,0 g der Polymermischung aus Beispiel 14 werden in einem Laborplanetenmischer der Fa. PC-Laborsystem, ausgestattet mit einem Balkenmischer und einem Dissolver, mit 40 g Diisoundecylphthalat (käuflich erhältlich unter dem Namen Jayflex DIUP bei der Fa. ExxonMobil), 4,0 g Vinyltrimethoxysilan, 96 g eines mit Stearinsäure beschichteten gemahlenes Calciumcarbonats mit einem mittleren Teilchendurchmesser (D50%) von ca. 0,4 µm (käuflich erhältlich unter der Bezeichnung Omyabond 302 bei der Firma Omya, D-Köln) und das Calciumcarbonat wird eine Minute mit dem Balkenmischer bei 200 U/min eingerührt. Danach wird für 5 min mit 600 U/min mit dem Balkenmischer und 1000 U/min mit dem Dissolver gerührt.

Es werden 2 g 3-Aminopropyl-trimethoxysilan zugegeben und eine Minute mit dem Balkenmischer bei 600 U/min und dem Dissolver bei 1000 U/min eingerührt. Danach wird im Teilvakuum (ca. 100 mbar) mit dem Balkenmischer für 1 Minute bei 600 U/min und 1 min bei 200 U/min homogenisiert und blasenfrei gerührt.

Die so erhaltene Masse wird in 310 ml PE-Kartuschen abgefüllt und 24 Stunden bei 20°C vor der Untersuchung gelagert.

Der erhaltene Klebstoff wird vernetzen gelassen und nach den in Beispiel 3 beschriebenen Methoden hinsichtlich seiner Hautbildung und ihrer mechanischen Eigenschaften untersucht. Die Hautbildezeit beträgt 20 min, die Shore-A-Härte 40, Reißfestigkeit 2,5 N/mm², das 100%-Modul 0,82 N/mm² und die Reißdehnung 317%.

## Patentansprüche

1. Verfahren zur Herstellung einer Mischung (M), welche silanterminierte Polymere (SP1) der allgemeinen Formel (I)
Y¹-[O-C(=O)-NH-(CR¹₂)_{b}-SiRₐ(OR²)₃₋ₐ]ₓ (I),
gegebenenfalls silanterminierte Polymere (SP2) der allgemeinen Formel (II)
Y²-[O-C(=O)-NH-(CR¹₂)_{b}-SiRₐ(OR²)₃₋ₐ]_{z} (II)
und hydroxyfunktionelle Polymere (SP3) der allgemeinen Formel (III)
Y²-[O-C(=O)-NH-(CR¹₂)_{b}-SiRₐ(OR²)₃₋ₐ]_{z-z1}(OH)_{z1} (III)
enthält, wobei
Y¹ einen x-wertigen Polymerrest mit einer zahlenmäßigen mittleren Molmasse Mₙ von mindestens 2000 g/mol bedeutet,
Y² einen z-wertigen Oligomer- oder Polymerrest mit mindestens 3 identischen Wiederhohlungseinheiten, die mindestens 2 Kohlenstoffatome und mindestens 1 Heteroatom enthalten, bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt,
R² gleich oder verschieden sein kann und Wasserstoffatom oder einen einwertigen, gegebenenfalls substituierten Kohlenwasserstoffrest darstellt,
x eine ganze Zahl von 2 bis 50 ist,
z eine ganze Zahl von 1 bis 50 ist,
z1 kleiner oder gleich z ist und eine ganze Zahl von 1 bis 50 ist,
a gleich oder verschieden sein kann und 0, 1 oder 2 ist und
b gleich oder verschieden sein kann und eine ganze Zahl von 1 bis 10, ist,
bei dem in einem ersten Verfahrensschritt eine Umsetzung von mindestens einem Polymer (HP1) der allgemeinen Formel (IV)
Y¹-[OH]_{X} (IV)
mit mindestens einem isocyanatfunktionellen Silan (S) der allgemeinen Formel (V)
O=C=N-(CR¹₂)_{b}-SiRₐ(OR²)₃₋ₐ (V)
zu silanterminierten Polymeren (SP1) erfolgt,
wobei das isocyanatfunktionelle Silan (S) der allgemeinen Formel (V) in einer Menge eingesetzt wird, dass auf jede Hydroxygruppe in den Verbindungen (HP1) der allgemeinen Formel (IV) mindestens 1,1 Isocyanatgruppen des isocyanatfunktionelle Silans (S) der allgemeinen Formel (V) kommen,
und anschließend in einem zweiten Verfahrensschritt sämtlich nicht abreagierten Isocyanatgruppen des isocyanatfunktionellen Silans (S) der allgemeinen Formel (V) mit mindestens einem Oligomer oder Polymer (HP2) der allgemeinen Formel (VI)
Y²(OH)_{z} (VI),
umgesetzt werden und die Verbindung (HP2) der allgemeinen Formel (VI) in einer Menge eingesetzt wird, dass auf jede nach dem ersten Verfahrensschritt noch in der Reaktionsmischung befindliche Isocyanatgruppe mindestens 1,1 Hydroxygruppen in den Verbindungen (HP2) der allgemeinen Formel (IV) kommen,
mit der Maßgabe, dass
• entweder z und z1 in den allgemeinen Formeln (II), (III) und (VI) den Wert von 1 besitzen, silanterminierte Polymere (SP2) der allgemeinen Formel (II) in der Mischung (M) enthalten sind, und die ebenfalls in der Mischung (M) enthaltenen Polymere (SP3) den im zweiten Reaktionsschritt eingesetzten Polymeren (HP2) entsprechen,
• oder z in den allgemeinen Formeln (II), (III) und (VI) einen Wert größer 1 besitzt, Y² einen z-wertigen Oligomer- oder Polymerrest mit einer zahlenmäßigen mittleren Molmasse Mₙ von höchstens 1500 g/mol bedeutet, und die Mischung (M) hydroxyfunktionelle Polymere (SP3) enthält, in denen z1 kleiner ist als z.

2. Verfahren nach Anspruch 1, bei dem z einen Wert von mindestens 2 besitzt und Y² einen z-wertigen Oligomer- oder Polymerrest mit einer zahlenmäßigen mittleren Molmasse Mₙ von höchstens 1000 g/mol bedeutet.

3. Verfahren nach einem der vorangehenden Ansprüche, bei dem x einen Wert von 2 oder 3 bedeutet.

4. Verfahren nach einem der vorangehenden Ansprüche, bei dem z einen Wert von 1 oder 2 bedeutet.

5. Verfahren nach einem der vorangehenden Ansprüche, bei dem z1 einen Wert von 1 oder 2 bedeutet.

6. Verfahren nach einem der vorangehenden Ansprüche, bei dem b einen Wert von 1 oder 3 bedeutet.

7. Verfahren nach einem der vorangehenden Ansprüche, bei dem R einen einwertigen Kohlenwasserstoffrest mit 1 bis 6 Kohlenstoffatomen bedeutet.

8. Verfahren nach einem der vorangehenden Ansprüche, bei dem der Polymerrest Y¹ ausgewählt wird aus Polyester-, Polyether-, Polyurethan-, Polyalkylen- oder Polyacrylatresten.

9. Verfahren nach einem der vorangehenden Ansprüche, bei dem der Polymerrest Y² ausgewählt wird aus Polyester-, Polyether-, Polyurethan-, Polyalkylen- oder Polyacrylatresten.

10. Verfahren nach einem der vorangehenden Ansprüche, bei dem beide Verfahrensschritte in Gegenwart eines bismuthaltigen Katalysators (K) durchgeführt werden.

11. Polymermischungen (M) herstellbar nach dem Verfahren gemäß einem der vorangehenden Ansprüche.

12. Verwendung der Polymermischungen (M) gemäß Anspruch 11 zur Herstellung von Kleb- und Dichtstoffen sowie von Beschichtungen.

## Claims

1. Process for preparing a mixture (M) which comprises silane-terminated polymers (SP1) of the general formula (I)
Y¹-[O-C(=O)-NH-(CR¹₂)_{b}-S1Rₐ(OR²)₃₋ₐ]ₓ (I),
optionally silane-terminated polymers (SP2) of the general formula (II)
Y²-[O-C(=O)-NH-(CR¹₂)_{b}-SiRₐ(OR²)₃₋ₐ]_{z} (II)
and hydroxy-functional polymers (SP3) of the general formula (III)
Y²-[O-C(=O)-NH-(CR¹₂)_{b}-SiRₐ(OR²)₃₋ₐ]_{z-z1}(OH)_{z1} (III)
where
Y¹ is an x-valent polymer radical having a numerical average molar mass Mₙ of at least 2000 g/mol,
Y² is a z-valent oligomer or polymer radical having at least 3 identical repeating units which contain at least 2 carbon atoms and at least 1 heteroatom,
R may be identical or different and is a monovalent, optionally substituted hydrocarbon radical,
R¹ may be identical or different and is hydrogen atom or a monovalent, optionally substituted hydrocarbon radical,
R² may be identical or different and is hydrogen atom or a monovalent, optionally substituted hydrocarbon radical,
x is an integer from 2 to 50,
z is an integer from 1 to 50,
z1 is less than or equal to z and is an integer from 1 to 50,
a may be identical or different and is 0, 1 or 2, and
b may be identical or different and is an integer from 1 to 10,
wherein, in a first process step, at least one polymer (HP1) of the general formula (IV)
Y¹-[OH]_{X} (IV)
reacts with at least one isocyanate-functional silane (S) of the general formula (V)
O=C=N- (CR¹₂) _{b}-SiRₐ (OR²) ₃₋ₐ (V)
to give silane-terminated polymers (SP1),
where the isocyanate-functional silane (S) of the general formula (V) is used in an amount such that there are at least 1.1 isocyanate groups of the isocyanate-functional silane (S) of the general formula (V) to each hydroxyl group in the compounds (HP1) of the general formula (IV),
and subsequently, in a second process step, all unreacted isocyanate groups of the isocyanate-functional silane (S) of the general formula (V) are reacted with at least one oligomer or polymer (HP2) of the general formula (VI)
Y²(OH)_{z} (VI),
and the compound (HP2) of the general formula (VI) is used in an amount such that there are at least 1.1 hydroxyl groups in the compounds (HP2) of the general formula (IV) to each isocyanate group still present in the reaction mixture after the first process step, with the proviso that
• either z and z1 in the general formulae (II), (III) and (VI) possess a value of 1, there are silane-terminated polymers (SP2) of the general formula (II) in the mixture (M), and the polymers (SP3) likewise present in the mixture (M) correspond to the polymers (HP2) used in the second reaction step,
• or z in the general formulae (II), (III) and (VI) possesses a value of more than 1, Y² is a z-valent oligomer or polymer radical having a numerical average molar mass Mₙ of at most 1500 g/mol, and the mixture (M) comprises hydroxy-functional polymers (SP3) in which z1 is less than z.

2. Process according to Claim 1, wherein z possesses a value of at least 2 and Y² is a z-valent oligomer or polymer radical having a numerical average molar mass Mₙ of at most 1000 g/mol.

3. Process according to any of the preceding claims, wherein x is a value of 2 or 3.

4. Process according to any of the preceding claims, wherein z is a value of 1 or 2.

5. Process according to any of the preceding claims, wherein z1 is a value of 1 or 2.

6. Process according to any of the preceding claims, wherein b is a value of 1 or 3.

7. Process according to any of the preceding claims, wherein R is a monovalent hydrocarbon radical having 1 to 6 carbon atoms.

8. Process according to any of the preceding claims, wherein the polymer radical Y¹ is selected from polyester, polyether, polyurethane, polyalkylene or polyacrylate radicals.

9. Process according to any of the preceding claims, wherein the polymer radical Y² is selected from polyester, polyether, polyurethane, polyalkylene or polyacrylate radicals.

10. Process according to any of the preceding claims, wherein both process steps are carried out in the presence of a bismuth-containing catalyst (K).

11. Polymer mixtures (M) preparable by the process according to any of the preceding claims.

12. Use of the polymer mixtures (M) according to Claim 11 for producing adhesives and sealants and also coatings.

## Revendications

1. Procédé de préparation d'un mélange (M) qui contient des polymères à terminaison silane (SP1) de formule générale (I)
Y¹-[O-C(=O)-NH-(CR¹₂)_{b}-SiRₐ(OR²)₃₋ₐ]ₓ (I),
éventuellement des polymères à terminaison silane (SP2) de formule générale (II)
Y²-[O-C(=O)-NH-(CR¹₂)_{b}-SiRₐ(OR²)₃₋ₐ]_{z} (II)
et des polymères à fonctionnalité hydroxy (SP3) de formule générale (III)
Y²-[O-C(=O)-NH-(CR¹₂)_{b}-SiRₐ(OR²)₃₋ₐ]_{z-z1}(OH)_{z1} (III)
dans lequel
Y¹ représente un radical polymère x-valent ayant une masse moléculaire moyenne en nombre Mₙ d'au moins 2 000 g/mol,
Y² représente un radical oligomère ou polymère z-valent ayant au moins 3 motifs répétitifs identiques, qui contiennent au moins 2 atomes de carbone et au moins 1 hétéroatome,
R peut être identique ou différent et représente un radical hydrocarboné monovalent, éventuellement substitué,
R¹ peut être identique ou différent et représente un atome d'hydrogène ou un radical hydrocarboné monovalent, éventuellement substitué,
R² peut être identique ou différent et représente un atome d'hydrogène ou un radical hydrocarboné monovalent, éventuellement substitué,
x représente un nombre entier de 2 à 50,
z représente un nombre entier de 1 à 50,
z1 est inférieur ou égal à z et représente un nombre entier de 1 à 50,
a peut être identique ou différent et représente 0, 1 ou 2 et
b peut être identique ou différent et représente un nombre entier de 1 à 10,
dans lequel, dans une première étape, on procède à une réaction d'au moins un polymère (HP1) de formule générale (IV)
Y¹-[OH]ₓ (IV)
avec au moins un silane à fonctionnalité isocyanate (S) de formule générale (V)
O=C=N-(CR¹₂)_{b}-SiRₐ(OR²)₃₋ₐ (V)
pour obtenir des polymères à terminaison silane (SP1),
le silane à fonctionnalité isocyanate (S) de formule générale (V) étant utilisé en une quantité telle que l'on a pour chaque groupe hydroxy des composés (HP1) de formule générale (IV) au moins 1,1 groupe isocyanate du silane à fonctionnalité isocyanate (S) de formule générale (V),
puis, dans une deuxième étape, on fait réagir la totalité des groupes isocyanate n'ayant pas réagi du silane à fonctionnalité isocyanate (S) de formule générale (V) avec au moins un oligomère ou un polymère (HP2) de formule générale (VI)
Y²(OH)_{z} (VI),
et on utilise le composé (HP2) de formule générale (VI) en une quantité telle que, pour chaque groupe isocyanate se trouvant encore dans le mélange réactionnel après la première étape, on a au moins 1,1 groupe hydroxy dans les composés (HP2) de formule générale (IV),
à la condition que
• ou bien z et z1, dans les formules générales (II), (III) et (VI), aient la valeur 1, que des polymères à terminaison silane (SP2) de formule générale (II) soient présents dans le mélange, et que les polymères (SP3) eux aussi contenus dans le mélange (M) correspondent aux polymères (HP2) utilisés dans la deuxième étape de réaction,
• ou bien z, dans les formules générales (II), (III) et (VI), aient une valeur supérieure à 1, que Y² représente un radical oligomère ou polymère z-valent ayant une masse moléculaire moyenne en nombre Mₙ d'au plus 1 500 g/mol, et que le mélange (M) contienne des polymères à fonctionnalité hydroxy (SP3), dans lesquels z1 est inférieur à z.

2. Procédé selon la revendication 1, dans lequel z a une valeur d'au moins 2 et Y² représente un radical oligomère ou polymère z-valent ayant une masse moléculaire moyenne en nombre Mₙ d'au plus 1 000 g/mol.

3. Procédé selon l'une des revendications précédentes, dans lequel x représente une valeur de 2 ou 3.

4. Procédé selon l'une des revendications précédentes, dans lequel z représente une valeur de 1 ou 2.

5. Procédé selon l'une des revendications précédentes, dans lequel z1 représente une valeur de 1 ou 2.

6. Procédé selon l'une des revendications précédentes, dans lequel b représente une valeur de 1 ou 3.

7. Procédé selon l'une des revendications précédentes, dans lequel R représente un radical hydrocarboné monovalent ayant 1 à 6 atomes de carbone.

8. Procédé selon l'une des revendications précédentes, dans lequel le radical polymère Y¹ est choisi parmi les radicaux polyester, polyéther, polyuréthane, polyalkylène ou polyacrylate.

9. Procédé selon l'une des revendications précédentes, dans lequel le radical polymère Y² est choisi parmi les radicaux polyester, polyéther, polyuréthane, polyalkylène ou polyacrylate.

10. Procédé selon l'une des revendications précédentes, dans lequel les deux étapes sont mises en œuvre en présence d'un catalyseur (K) contenant du bismuth.

11. Mélanges de polymères (M) pouvant être préparés par le procédé selon l'une des revendications précédentes.

12. Utilisation des mélanges de polymères (M) selon la revendication 11 pour fabriquer des adhésifs et des produits d'étanchéité, ainsi que des revêtements.
